# EUROPÄISCHE PATENTSCHRIFT

(11) **EP 3 709 461 B1**
(45) Veröffentlichungstag und Bekanntmachung des Hinweises auf die Patenterteilung: **04.10.2023**
(21) Anmeldenummer: 20162105.9
(22) Anmeldetag: 10.03.2020
(51) Int. Cl.: H02G 3/06, H02G 3/08, H02G 3/22, H02G 15/013

(54) **DURCHFÜHRUNGSVORRICHTUNG**
EXECUTION DEVICE
DISPOSITIF DE MISE EN OEUVRE

(30) Priorität: 11.03.2019 DE 102019106140
(43) Veröffentlichungstag der Anmeldung: 16.09.2020
(73) Patentinhaber: Reichle & De-Massari AG, 8620 Wetzikon (CH)
(72) Erfinder: Di Domenico, Maurizio, 8306 Brüttisellen (CH); Winterhoff, Hans, 79761 Waldshut-Tiengen (DE)
(74) Vertreter: Daub, Thomas

(56) Entgegenhaltungen:
- EP-A2- 1 317 025
- DE-A1-102011 054 294
- DE-A1-102017 118 513
- DE-B3-102016 114 166
- US-A1- 2010 307 816

## Beschreibung

### Stand der Technik

Die Erfindung betrifft eine Durchführungsvorrichtung nach Anspruch 1 und ein Durchführungssystem nach Anspruch 8.

Es ist bereits eine Durchführungsvorrichtung, insbesondere eine Kabeldurchführungsvorrichtung, zur Durchführung eines länglichen Objekts durch zumindest eine physische Begrenzung, insbesondere ein Wandbauteil, mit zumindest einer Dichteinheit, welche dazu vorgesehen ist, das Objekt in einem montierten Zustand zumindest abschnittsweise vollständig in Umfangrichtung zu umschließen und abzudichten, mit zumindest einer Stabilisierungseinheit, welche in einem montierten Zustand zumindest teilweise in die Dichteinheit hineingreift, vorgeschlagen worden.

Stand der Technik ist zum Beispiel in DE 10 2017 118513 A1 oder EP 1 317 025 A2 zu finden.

DE 10 2017 118513 A1 betrifft eine Kabelverschraubung für ein Kabel in Form eines Abschirm- oder Erdungskabels mit einer metallischen Zwischenlage, wobei die Kabelverschraubung einen Gehäusestutzen zum Einsatz in eine Öffnung in einer Gehäusewand, ein mit dem Gehäusestutzen verschraubbares Zwischenstück und ein mit dem Zwischenstück verschraubbares Endstück aufweist, wobei der Gehäusestutzen eine Primärdichtung mit einem Dichtelement zur Abdichtung des Gehäuseinnenraums trägt und wobei das Endstück eine Sekundärdichtung zur dichtenden Anlage an eine Außenmantelfläche des Kabels trägt.

EP 1 317 025 A2 offenbart eine strapazierfähige Steckeranordnung für Datenkabel, insbesondere RJ-45-Kabel, zur Montage auf einem Kabelstecker, insbesondere RJ-45-Stecker, mit daran angeschlossenem Kable, umfasst: a) ein Gehäuse mit Positionierungsmitteln zur Positionierung des Kabelsteckers in einer vorgegebenen Position innerhalb des Gehäuses und mit einem an einer seiner Flächen angeordneten Gewinde; b) ein radial zusammendrückbares Spannteil, das den Kabelstecker in seiner vorgegebenen Position im Gehäuse hält und das das Kabel klemmt; c) eine sich verjüngende Tülle, welche das Spannteil radial zusammenpresst; und d) eine ein Gewinde aufweisende Buchse zur Halterung der sich verjüngenden Tülle und zur Ausbildung einer Gewindeverbindung mit dem Gewinde am Gehäuse, wobei durch Festziehen dieser Gewindeverbindung die Buchse, die Tülle, das Spannteil, das Gehäuse und der Kabelstecker miteinander verspannt werden.

Die Aufgabe der Erfindung besteht insbesondere darin, eine gattungsgemäße Vorrichtung und ein gattungsgemäßes System mit verbesserten Eigenschaften hinsichtlich einer Abdichtung und einer mechanischen Stabilität bereitzustellen. Die Aufgabe wird erfindungsgemäß durch die Merkmale der Patentansprüche 1 und 8 gelöst, während vorteilhafte Ausgestaltungen und Weiterbildungen der Erfindung den Unteransprüchen entnommen werden können.

### Vorteile der Erfindung

Die Erfindung geht aus von einer Durchführungsvorrichtung, insbesondere von einer Kabeldurchführungsvorrichtung, zur Durchführung eines länglichen Objekts durch zumindest eine physische Begrenzung, insbesondere ein Wandbauteil, mit zumindest einer Dichteinheit, welche dazu vorgesehen ist, das Objekt in einem montierten Zustand zumindest abschnittsweise vollständig in Umfangrichtung zu umschließen und abzudichten, mit zumindest einer Stabilisierungseinheit, welche in einem montierten Zustand zumindest teilweise in die Dichteinheit hineingreift.

Es wird vorgeschlagen, dass die Durchführungsvorrichtung eine Kupplungseinheit mit einem Aufnahmekanal zu einer Aufnahme der Dichteinheit, insbesondere zusammen mit dem in der Dichteinheit angeordneten länglichen Objekt, und mit einem Verschlusselement zu einer Fixierung der Stabilisierungseinheit an der Kupplungseinheit umfasst. Vorzugsweise ist die Durchführungsvorrichtung zu einer Führung des länglichen Objekts durch die physische Begrenzung hindurch vorgesehen. Insbesondere ist die Durchführungsvorrichtung dazu vorgesehen, das längliche Objekt an der physischen Begrenzung zu sichern, insbesondere zu fixieren. Insbesondere ist die Durchführungsvorrichtung in einem an der physischen Begrenzung und dem länglichen Objekt montierten Zustand dazu vorgesehen, einen Montagedurchbruch durch die physische Begrenzung fluiddicht, insbesondere wasserdicht, zu verschließen. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "länglichen Objekt" soll insbesondere ein Objekt verstanden werden, dass eine Haupterstreckung und eine zu der Haupterstreckung senkrechte maximale Quererstreckung aufweist, wobei die maximale Quererstreckung kleiner, insbesondere zumindest 10mal kleiner, bevorzugt mehr als 100mal kleiner, als die Haupterstreckung ausgebildet ist. Beispiele für längliche Objekte, für welche die Durchführungsvorrichtung vorgesehen ist, umfassen optische und/oder elektrische Kabel, insbesondere Glasfaserkabel, Schläuche, Rohrleitungen, Haltestangen, Drahtseile oder dergleichen. Unter einer "physischen Begrenzung" soll insbesondere ein festes Objekt verstanden werden, das einen Raum begrenzt und insbesondere eine Führung des länglichen Objekts behindert. Beispielsweise ist die physische Begrenzung als Wand, bevorzugt als Gehäusewand, als Schachtwand, als Kanalwand, als Gebäudewand, als Mauer, als Abdeckung, als Abschirmung, als Isoliervorrichtung, als Dämmvorrichtung oder dergleichen ausgebildet. Vorzugsweise ist die Durchführungsvorrichtung zu einer direkten Montage an der physischen Begrenzung, insbesondere in einem Montagedurchbruch der physischen Begrenzung, vorgesehen.

Vorzugsweise umfasst die Dichteinheit zumindest eine Dichttülle. Vorzugsweise ist die Dichttülle dazu vorgesehen, in einem montierten Zustand das längliche Objekt zumindest abschnittsweise vollständig in Umfangrichtung zu umschließen und abzudichten. Insbesondere weist die Dichttülle einen Dichtungskanal auf, der zu einer Aufnahme des länglichen Objekts, insbesondere zu einer Ummantelung des länglichen Objekts durch die Dichttülle, vorgesehen ist. Vorzugsweise umfasst die Dichttülle, insbesondere der Dichtungskanal, einen Dichtabschnitt. Vorzugsweise ist der Dichtabschnitt dazu vorgesehen, in einem an dem länglichen Objekt montierten Zustand in Umfangrichtung spielfrei an dem länglichen Objekt anzuliegen, und insbesondere durch eine intrinsische Vorspannung abzudichten. Vorzugsweise ist der Dichtabschnitt zumindest teilweise, insbesondere vollständig, aus einem kolloidartigen Material, insbesondere einem Gel, bevorzugt aus einem Polyurethan-Gel o. dgl., gefertigt. Vorzugsweise umfasst die Dichttülle, insbesondere der Dichtungskanal, zumindest einen Einführabschnitt zur Einführung des länglichen Objekts. Vorzugsweise ist der Einführabschnitt aus einem kolloidartigen Material, insbesondere einem Gel, bevorzugt aus einem Polyurethan-Gel o. dgl., gefertigt. Vorzugsweise sind der Dichtabschnitt und der Einführabschnitt, insbesondere entlang einer Verbindungsachse, miteinander verbunden, insbesondere einstückig ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und/oder durch Herstellung in einem Druckverfahren und vorteilhaft aus einem einzelnen Rohling. Vorzugsweise sind/ist der Dichtabschnitt und/oder der Einführabschnitt, insbesondere die Dichttülle, bezüglich der Verbindungsachse zumindest im Wesentlichen rotationssymmetrisch ausgebildet. Unter einem "im Wesentlichen rotationssymmetrischen" Objekt soll insbesondere ein Objekt verstanden werden, dessen Schnittmenge mit einem gedachten Rotationskörper, welcher eine mengentheoretisch kleinste symmetrische Differenz zu dem Objekt aufweist, zumindest 75%, bevorzugt zumindest 85%, besonders bevorzugt zumindest 95% des Volumens des Objekts entspricht. Vorzugsweise ist eine maximale und/oder durchschnittliche Erstreckung, insbesondere ein Innendurchmesser, des Einführabschnitts senkrecht zu der Verbindungsachse größer als eine maximale und/oder durchschnittliche Erstreckung, insbesondere ein Innendurchmesser, des Dichtabschnitts. Insbesondere ist der Einführabschnitt in Richtung des Dichtabschnitts verjüngend ausgebildet. Vorzugsweise umfasst die Dichttülle an einer Außenwand des Einführabschnitts zumindest eine Verdickung, insbesondere einen Dichtring, welcher einstückig mit dem Einführabschnitt ausgebildet ist.

Vorzugsweise umfasst die Stabilisierungseinheit zumindest eine Stützeinheit. Vorzugsweise umfasst die Stützeinheit ein Stützelement. Vorzugsweise ist das Stützelement aus einem härteren Material als das Dichtungselement gefertigt. Vorzugsweise greift das Stützelement in einem an der Kupplungseinheit fixierten Zustand der Stabilisierungseinheit in die Dichteinheit, insbesondere in den Einführabschnitt hinein. Vorzugsweise weist das Stützelement kammartige Fortsätze auf, die insbesondere in einem an der Kupplungseinheit fixierten Zustand der Stabilisierungseinheit in den Einführabschnitt hineingreifen. Vorzugsweise liegen die kammartigen Fortsätze in einem an der Kupplungseinheit fixierten Zustand der Stabilisierungseinheit an einer Innenwand der Dichttülle, insbesondere des Einführabschnitts, an. Es ist denkbar, dass das Stützelement mit der Dichttülle, insbesondere im Zuge eines Mehrkomponenten Spritzverfahrens, einstückig ausgebildet ist.

Vorzugsweise ist die Kupplungseinheit zu einem direkten Kontakt mit der physischen Begrenzung, insbesondere dem Wandbauteil, vorgesehen. Insbesondere umfasst die Kupplungseinheit einen Dichtungsabschnitt, welcher insbesondere zu einer Anordnung in einem Montagedurchbruch der physischen Begrenzung vorgesehen ist. Insbesondere umgibt die Kupplungseinheit, insbesondere der Aufnahmekanal, in einem montierten Zustand zumindest in dem Dichtungsabschnitt das längliche Objekt und/oder die Dichteinheit in Umfangsrichtung vollständig. Vorzugsweise umfasst die Kupplungseinheit zumindest einen Zugentlastungsabschnitt, zu einer Zugentlastung des länglichen Objekts in einem an der Durchführungsvorrichtung montierten Zustand. Vorzugsweise umfasst die Kupplungseinheit zumindest einen Aufnahmeabschnitt, zu einer Aufnahme der Stabilisierungseinheit, insbesondere der Stützeinheit. Vorzugsweise greift die Stabilisierungseinheit in einem an der Kupplungseinheit fixierten Zustand von dem Aufnahmeabschnitt aus mit dem Stützelement in den Dichtungsabschnitt hinein. Vorzugsweise ist der Dichtungsabschnitt zwischen dem Aufnahmeabschnitt und dem Zugentlastungsabschnitt angeordnet. Vorzugsweise sind der Aufnahmeabschnitt, der Dichtungsabschnitt und der Zugentlastungsabschnitt entlang einer Haupterstreckungsrichtung der Durchführungsvorrichtung, insbesondere der Kupplungseinheit, angeordnet. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Vorzugsweise verläuft der Aufnahmekanal zumindest im Wesentlichen parallel zu der Haupterstreckungsrichtung. Vorzugsweise ist die Verbindungsachse der Dichttülle in einem montierten Zustand der Durchführungsvorrichtung zumindest im Wesentlichen parallel zu der der Haupterstreckungsrichtung angeordnet. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Vorzugsweise weist die Stabilisierungseinheit, insbesondere die Stützeinheit, zumindest ein zu dem Verschlusselement der Kupplungseinheit komplementäres weiteres Verschlusselement zu einer Fixierung der Stabilisierungseinheit an der Kupplungseinheit auf. Vorzugsweise ist das Verschlusselement in dem Aufnahmeabschnitt angeordnet. Insbesondere fixiert die Stabilisierungseinheit die Dichteinheit, insbesondere die Dichttülle, in einem an der Kupplungseinheit fixierten Zustand der Stabilisierungseinheit formschlüssig in dem Aufnahmekanal der Kupplungseinheit. Vorzugsweise umfasst der Aufnahmekanal zumindest einen Dichtungsabsatz. Insbesondere verengt sich eine zu der Haupterstreckungsrichtung senkrechte maximale Quererstreckung des Aufnahmekanals von dem Aufnahmeabschnitt zu dem Dichtungsabschnitt. Vorzugsweise liegt die Dichteinheit, insbesondere die Verdickung der Dichttülle, in einem montierten Zustand an dem Dichtungsabsatz an. Vorzugsweise ist die Stabilisierungseinheit in einem an der Kupplungseinheit fixierten Zustand dazu vorgesehen, die Dichteinheit, insbesondere die Verdickung der Dichttülle, insbesondere in Richtung der Verbindungsachse, gegen den Dichtungsabsatz zu pressen. Insbesondere ist die Dichteinheit, insbesondere die Verdickung der Dichttülle, dazu vorgesehen, in einem zwischen der Kupplungseinheit und der Stabilisierungseinheit zusammengepressten Zustand den Aufnahmekanal an dem Dichtungsabsatz abzudichten.

Durch die erfindungsgemäße Ausgestaltung der Durchführungsvorrichtung kann vorteilhaft eine sichere Fixierung der Dichteinheit an dem länglichen Objekt erreicht werden. Insbesondere kann ein Verschieben der Dichteinheit entlang des länglichen Objekts vorteilhaft weitestgehend verhindert werden.

Weiter wird vorgeschlagen, dass das Verschlusselement als Rastelement zur Bildung einer Rastverbindung mit der Stabilisierungseinheit ausgebildet ist. Vorzugsweise ist das Verschlusselement als Rastaufnahme ausgebildet, insbesondere zu einer Aufnahme des weiteren Verschlusselements. Vorzugsweise ist das weitere Verschlusselement als Rastelement, insbesondere als Rastzunge und/oder als Rastnase, ausgebildet. Es ist auch denkbar, dass das Verschlusselement als Rastelement und das weitere Verschlusselement als Rastaufnahme ausgebildet ist. Vorzugsweise ist das Verschlusselement als Durchbruch durch eine Wand des Aufnahmekanals ausgebildet. Es ist aber auch denkbar, dass das Verschlusselement als Vertiefung, als Absatz oder dergleichen an einer Innenwand und/oder Außenwand des Aufnahmekanals ausgebildet ist. Vorzugsweise ist das weitere Verschlusselement dazu vorgesehen, von einer Innenwand des Aufnahmekanals her in das Verschlusselement hineinzugreifen. Vorzugsweise umfasst die Kupplungseinheit zumindest zwei analog oder verschieden ausgebildete Verschlusselemente, die insbesondere auf voneinander abgewandten Seiten des Aufnahmekanals angeordnet sind. Vorzugsweise umfasst die Stabilisierungseinheit, insbesondere die Stützeinheit zumindest zwei analog oder verschieden ausgebildete weitere Verschlusselemente, die insbesondere auf voneinander abgewandten Seiten der Stützeinheit angeordnet sind. In einer alternativen Ausgestaltung ist es auch denkbar, dass das Verschlusselement als Schraubverschluss, insbesondere als Bajonettverschluss, ausgebildet ist. Durch die erfindungsgemäße Ausgestaltung kann eine Montage und/oder Demontage der Durchführungsvorrichtung vorteilhaft schnell erfolgen. Insbesondere kann eine Befestigung der Stabilisierungseinheit an der Kupplungseinheit vorteilhaft zuverlässig erfolgen. Insbesondere ist eine formschlüssige Befestigung vorteilhaft resistent gegen eine elastische Rückstellkraft der Dichteinheit.

Ferner wird vorgeschlagen, dass die Kupplungseinheit zumindest ein Verankerungselement, insbesondere einen Hohlraumanker, umfasst zu einer Fixierung der Kupplungseinheit hinter der physischen Begrenzung, insbesondere dem Wandbauteil. Unter einem "Verankerungselement" soll insbesondere ein Element verstanden werden, welches in einem an der physischen Begrenzung montierten Zustand einen Formschluss mit der physischen Begrenzung entgegen einer Montagerichtung des Elements bildet. Insbesondere umfasst das Verankerungselement einen Montagezustand. Insbesondere umfasst das Verankerungselement einen Ankerzustand. Insbesondere ist in dem Montagezustand eine Maximalerstreckung in zumindest einer Richtung, insbesondere in einer zur Montagerichtung senkrechten Richtung, kleiner als die entsprechende Maximalerstreckung in dem Ankerzustand. Insbesondere ist der Montagezustand zu einer Verkleinerung der Maximalerstreckung des Verankerungselements auf eine korrespondierende Erstreckung eines Montagedurchbruchs der physischen Begrenzung vorgesehen. Vorzugsweise ist der Ankerzustand zu einer Vergrößerung der Maximalerstreckung des Verankerungselements über eine korrespondierende Erstreckung eines Montagedurchbruchs der physischen Begrenzung hinaus vorgesehen. Beispielsweise ist das Verankerungselement als Rastelement, als Spreizelement, als Kippelement, als Federklappelement oder dergleichen ausgebildet. Es ist aber auch denkbar, dass das Ankerelement als Harpunenelement ausgebildet ist. Vorzugsweise ist das Ankerelement in dem Zugentlastungsabschnitt angeordnet. Durch die erfindungsgemäße Ausgestaltung ist eine Befestigung der Durchführungsvorrichtung an einer physischen Begrenzung vorteilhaft unabhängig von einem komplementären Aufnahmeelement. Insbesondere genügt für eine Befestigung der Durchführungsvorrichtung an der physischen Begrenzung vorteilhaft ein, insbesondere nachträglich angebrachter, Montagedurchbruch, beispielsweise ein Bohrloch, durch die physische Begrenzung.

Weiterhin wird vorgeschlagen, dass die Kupplungseinheit zumindest einen sich entlang einer Richtung des Aufnahmekanals verjüngenden Dichtungsabschnitt aufweist. Insbesondere verringert sich in dem Dichtungsabschnitt von dem Aufnahmeabschnitt her zu dem Zugentlastungsabschnitt hin eine maximale Quererstreckung der Kupplungseinheit senkrecht zu der Haupterstreckungsrichtung. Insbesondere ist der verjüngende Dichtungsabschnitt zu einer Einschränkung einer Eindringtiefe der Kupplungseinheit in die physische Begrenzung vorgesehen. Durch die erfindungsgemäße Ausgestaltung kann ein Bewegungsspielraum der Durchführungsvorrichtung in einem Montagedurchbruch der physischen Begrenzung vorteilhaft klein gehalten werden. Insbesondere kann eine Toleranz für eine maximale Erstreckung des Montagedurchbruchs vorteilhaft groß gehalten werden.

Des Weiteren wird vorgeschlagen, dass die Dichteinheit ein Dichtungselement umfasst, welches in einer Vertiefung an einer Außenseite der Kupplungseinheit angeordnet ist. Vorzugsweise ist das Dichtungselement als Dichtring ausgebildet. Vorzugsweise ist die Vertiefung in dem Dichtungsabschnitt angeordnet. Vorzugsweise ist die Vertiefung zwischen dem Dichtungsabsatz und dem Ankerelement angeordnet. Vorzugsweise ist das Dichtungselement elastisch ausgebildet. Insbesondere ragt das Dichtungselement in einem in der Vertiefung angeordneten Zustand über die Vertiefung hinaus. Insbesondere ist das Dichtungselement dazu vorgesehen, in einem in der physischen Begrenzung angeordneten Zustand der Durchführungsvorrichtung, zwischen der physischen Begrenzung und einer Außenwand der Kupplungseinheit in der Vertiefung zusammengepresst zu werden. Insbesondere ist das Dichtungselement zu einem Abdichten eines Zwischenraums zwischen dem Montagedurchbruch der physischen Begrenzung und der Kupplungseinheit vorgesehen. Durch die erfindungsgemäße Ausgestaltung kann die Durchführungsvorrichtung vorteilhaft dicht in einem Montagedurchbruch der physischen Begrenzung angeordnet werden.

Ferner wird vorgeschlagen, dass die Kupplungseinheit zumindest ein reversibles Fixierungselement zu einer Fixierung des länglichen Objekts an dem Aufnahmekanal umfasst. Vorzugsweise ist das reversible Fixierungselement in dem Zugentlastungsbereich angeordnet. Unter einem "reversiblen Fixierungselement" soll insbesondere ein Fixierungselement verstanden werden, das zerstörungsfrei lösbar und insbesondere zu einer erneuten Fixierung wiederverwendbar ist. Bevorzugt ist das reversible Fixierungselement als Schraubelement ausgebildet, insbesondere als Sicherungsmutter. Alternativ ist das reversible Fixierungselement als Sicherungsschelle ausgebildet. Es ist auch denkbar, dass das reversible Fixierungselement als mit einer Federkraft beaufschlagtes Klemmelement ausgebildet ist. Vorzugsweise umfasst die Kupplungseinheit, insbesondere der Zugentlastungsabschnitt, eine Durchgangsöffnung zu einer Befestigung des reversiblen Fixierungselements an dem Aufnahmekanal. Vorzugsweise ist der Aufnahmekanal in dem Zugentlastungsbereich zu einer Durchführung einer Fixierung des länglichen Objekts mit dem reversiblen Fixierungselement zumindest teilweise offen ausgebildet. Insbesondere ist der Aufnahmekanal in dem Zugentlastungsbereich zumindest teilweise als Führungsschiene ausgebildet. Durch die erfindungsgemäße Ausgestaltung kann das längliche Objekt vorteilhaft sicher terminiert werden. Insbesondere kann ein Ende des länglichen Objekts vorteilhaft bis zu einer Weiterbearbeitung, beispielsweise einer Verbindung mit einem weiteren länglichen Objekt, vorteilhaft geschützt gelagert werden. Insbesondere kann die Durchführungsvorrichtung vorteilhaft wiederverwertet werden.

Weiter wird vorgeschlagen, dass in dem Aufnahmekanal zumindest ein Anlageelement zu einem Anlegen des länglichen Objekts angeordnet ist. Insbesondere ist das Anlageelement in dem Zugentlastungsbereich, insbesondere in dem als Führungsschiene ausgebildeten Abschnitt des Aufnahmekanals, angeordnet. Vorzugsweise grenzt das Anlageelement an die Durchgangsöffnung für das Fixierungselement an. Vorzugsweise umfasst der Aufnahmekanal zumindest ein weiteres Anlageelement, welches insbesondere analog zu dem Anlageelement ausgebildet ist. Vorzugsweise ist die Durchgangsöffnung zwischen dem Anlageelement und dem weiteren Anlageelement angeordnet. Vorzugsweise ist das Anlageelement als Vertiefung, insbesondere als Nut, oder Erhöhung, insbesondere als Steg, innerhalb des Aufnahmekanals ausgebildet. Vorzugsweise ist eine Haupterstreckungsrichtung des Anlageelements zumindest im Wesentlichen parallel zu der Haupterstreckungsrichtung der Durchführungsvorrichtung, insbesondere der Kupplungseinheit angeordnet. Insbesondere ist das reversible Fixierelement dazu vorgesehen, das längliche Objekt in einem an dem Anlageelement angeordneten Zustand des länglichen Objekts zu fixieren, insbesondere an das Anlageelement anzupressen. Durch die erfindungsgemäße Ausgestaltung kann eine vorteilhaft sichere und/oder zuverlässige Fixierung des länglichen Objekts erreicht werden. Insbesondere kann ein Wegrollen des länglichen Objekts, insbesondere während eines Fixierungsprozesses des länglichen Objekts, vorteilhaft vermieden werden.

Weiterhin wird vorgeschlagen, dass an einer Außenfläche des Aufnahmekanals Stützstreben angeordnet sind. Vorzugsweise ist zumindest eine Stützstrebe in dem Aufnahmebereich und/oder dem Dichtungsbereich angeordnet. Insbesondere verläuft zumindest eine Stützstrebe, insbesondere in dem Aufnahmebereich, zumindest im Wesentlichen parallel zu der Haupterstreckungsrichtung der Durchführungsvorrichtung, insbesondere der Kupplungseinheit. Insbesondere verläuft zumindest eine Stützstrebe, insbesondere in dem Aufnahmebereich, zumindest im Wesentlichen senkrecht zu der der Haupterstreckungsrichtung der Durchführungsvorrichtung, insbesondere der Kupplungseinheit. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise umgeben Stützstreben, zumindest in dem Aufnahmebereich und/oder dem Dichtungsbereich, den Aufnahmekanal in zumindest einer Ebene in Umfangsrichtung zumindest teilweise und bevorzugt vollständig. Vorzugsweise umgeben Stützstreben den Aufnahmekanal in mehreren zueinander zumindest im Wesentlichen parallelen Ebenen zumindest teilweise und bevorzugt vollständig. Vorzugsweise verbindet zumindest eine Stützstrebe zumindest zwei zumindest im Wesentlichen parallele Stützstreben. Vorzugsweise ist zumindest eine Stützstrebe an dem Verschlusselement, insbesondere um das Verschlusselement herum, angeordnet. Durch die erfindungsgemäße Ausgestaltung kann die Kupplungseinheit vorteilhaft stabil ausgebildet werden. Insbesondere kann die Kupplungseinheit mit vorteilhaft wenig Material hergestellt werden. Insbesondere kann eine vorteilhaft kostengünstige und/oder stabile Kupplungseinheit zur Verfügung gestellt werden.

Des Weiteren wird vorgeschlagen, dass ein zum Aufnahmekanal zumindest im Wesentlichen senkrechter Querschnitt der Kupplungseinheit, welcher einen größten Umfang aufweist, zumindest im Wesentlichen polygonal, insbesondere quadratförmig, ausgebildet ist. Unter "zum Aufnahmekanal senkrecht" soll insbesondere in einer Ebene senkrecht zur Haupterstreckungsrichtung der Durchführungsvorrichtung, insbesondere der Kupplungseinheit verstanden werden. Unter einem "im Wesentlichen polygonalen Querschnitt" soll insbesondere ein Umfang des Querschnitts verstanden werden, der aus geraden Teilstrecken zusammengesetzt ist, wobei eine durch zwei Teilstrecken gebildete Ecke abgerundet, gefast oder dergleichen ausgebildet sein kann. Insbesondere entspricht eine Summe aller geraden Teilstrecken zumindest 60 %, bevorzugt zumindest 75 %, besonders bevorzugt zumindest 90 % des gesamten Umfangs. Vorzugsweise ist der polygonal ausgebildete Umfang in dem Aufnahmebereich angeordnet. Vorzugsweise ist ein Umfang zumindest in der Mehrzahl aller Querschnitte des Dichtungsbereichs drehsymmetrisch, insbesondere rotationssymmetrisch, ausgebildet. Durch die erfindungsgemäße Ausgestaltung der Durchführungsvorrichtung kann vorteilhaft im Zusammenspiel mit einem Rahmenelement, beispielsweise des Wandelements, und/oder im Zusammenspiel mit einer weiteren parallel angeordneten Durchführungsvorrichtung ein Verdrehen der Durchführungsvorrichtung vermieden werden.

Darüber hinaus wird ein Durchführungssystem mit zumindest einer erfindungsgemäßen Durchführungsvorrichtung mit zumindest einem Wandbauteil, welches zumindest ein Aufnahmeelement zu einer Aufnahme der zumindest einen Durchführungsvorrichtung aufweist, vorgeschlagen. Insbesondere ist das Wandbauteil zu einer Montage in der physischen Begrenzung vorgesehen. Es ist denkbar, dass das Wandbauteil zu einem Einbau in einen Montagedurchbruch der physischen Begrenzung vorgesehen ist und/oder als modulares Bauteil für die physische Begrenzung, beispielsweise als Gehäusewand einer Schaltbox, ausgebildet ist. Vorzugsweise ist das Aufnahmeelement komplementär, insbesondere passgenau, zu der Durchführungsvorrichtung, insbesondere zu der Kupplungseinheit ausgebildet. Vorzugsweise ist das Aufnahmeelement komplementär zu dem Dichtungsabschnitt der Kupplungseinheit ausgebildet. Vorzugsweise umfasst das Durchführungssystem zumindest ein Rahmenelement. Vorzugsweise umgibt das Rahmenelement zumindest eins, insbesondere mehrere, Aufnahmeelemente. Insbesondere ist das Rahmenelement zumindest abschnittsweise komplementär zu dem Aufnahmeabschnitt, insbesondere zu dem polygonal ausgebildeten Umfang, der Kupplungseinheit, ausgebildet. Durch die erfindungsgemäße Ausgestaltung des Durchführungssystems kann eine vorteilhaft zuverlässige Halterung und/oder eine vorteilhaft zuverlässige Abdichtung der Durchführungsvorrichtung bei einer Montage an der physischen Begrenzung erreicht werden.

Die erfindungsgemäße Durchführungsvorrichtung und/oder das erfindungsgemäße Durchführungssystem sollen/soll hierbei nicht auf die oben beschriebene Anwendung und Ausführungsform beschränkt sein. Insbesondere können/kann die erfindungsgemäße Durchführungsvorrichtung und/oder das erfindungsgemäße Durchführungssystem zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Explosionsdarstellung eines erfindungsgemäßen Durchführungssystems mit einer erfindungsgemäßen Durchführungsvorrichtung,
- Fig. 2: eine schematische Aufsicht auf das erfindungsgemäße Durchführungssystem,
- Fig. 3: eine schematische Schnittdarstellung des erfindungsgemäßen Durchführungssystems,
- Fig. 4: eine schematische Darstellung einer Kupplungseinheit der erfindungsgemäßen Durchführungsvorrichtung,
- Fig. 5: eine schematische Darstellung einer Stützeinheit der erfindungsgemäßen Durchführungsvorrichtung,
- Fig. 6: eine schematische Darstellung einer Dichteinheit der erfindungsgemäßen Durchführungsvorrichtung und
- Fig. 7: eine schematische Darstellung eines Wandbauteils des erfindungsgemäßen Durchführungssystems.

### Beschreibung des Ausführungsbeispiels

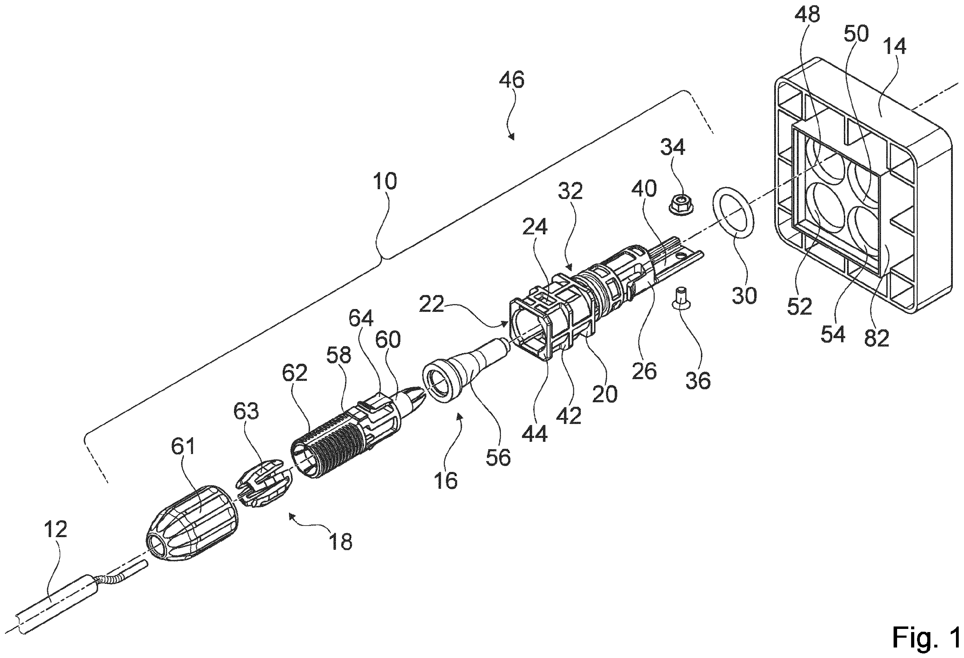

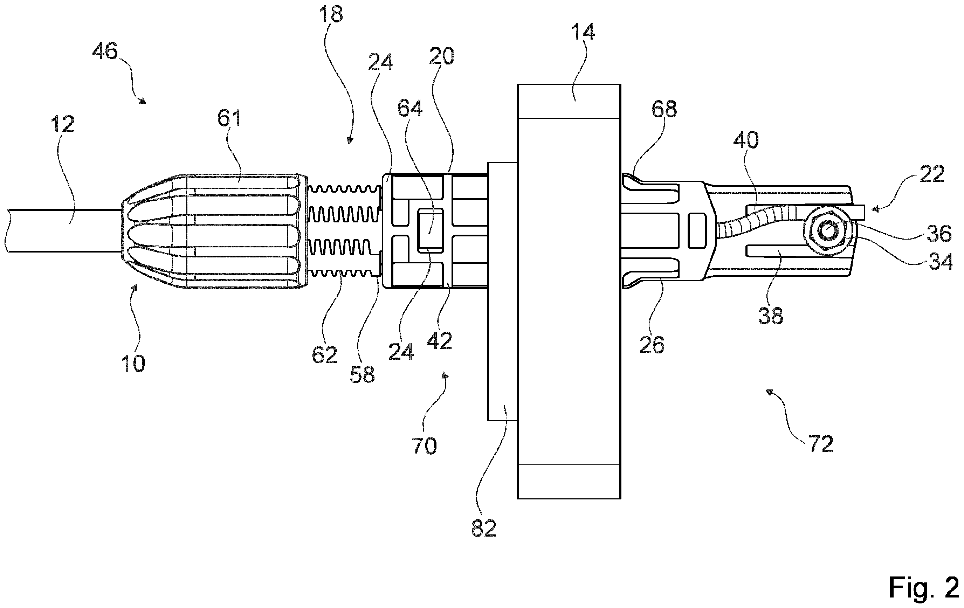

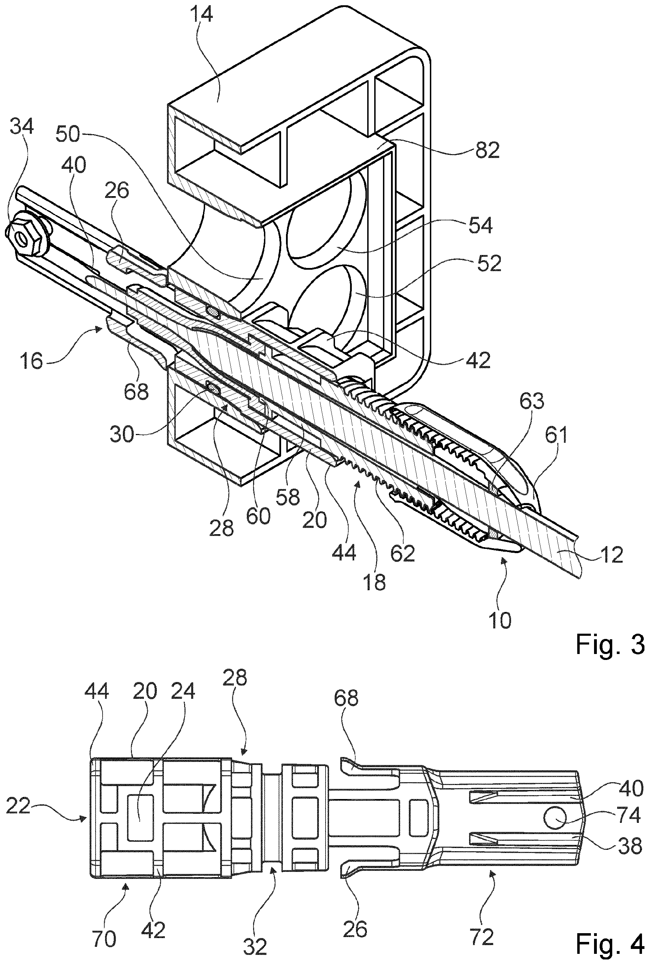

Die Figuren 1 bis 3 zeigen eine Durchführungsvorrichtung 10. Die Durchführungsvorrichtung 10 wird beispielhaft im Rahmen eines Durchführungssystems 46 dargestellt, ist jedoch unabhängig von dem Durchführungssystem 46 einsetzbar. Insbesondere zeigt Figur 1 eine Explosionsdarstellung, Figur 2 eine Aufsicht und Figur 3 eine Schnittdarstellung des zusammengebauten Durchführungssystems 46.

Das Durchführungssystem 46 umfasst zumindest die Durchführungsvorrichtung 10. Das Durchführungssystem 46 umfasst zumindest ein Wandbauteil 14. Das Wandbauteil 14 umfasst zumindest ein Aufnahmeelement 48 zu einer Aufnahme der zumindest einen Durchführungsvorrichtung 10. Vorzugsweise ist die Durchführungsvorrichtung 10 als Kabeldurchführungsvorrichtung, insbesondere als Glasfaserkabeldurchführungsvorrichtung, ausgebildet. Die Durchführungsvorrichtung 10 ist zur Durchführung eines länglichen Objekts 12, insbesondere eines Glasfaserkabels, durch zumindest eine physische Begrenzung vorgesehen. Beispielhaft ist die physische Begrenzung als Wandbauteil 14 des Durchführungssystems 46 ausgebildet. Alternativ ist die Durchführungsvorrichtung 10 direkt in einem Montagedurchbruch, insbesondere in einem Bohrloch, der physischen Begrenzung anordenbar.

Die Durchführungsvorrichtung 10 umfasst zumindest eine Dichteinheit 16. Vorzugsweise umfasst die Dichteinheit 16 zumindest eine Dichttülle 56. Vorzugsweise umfasst die Dichteinheit 16 zumindest ein Dichtungselement 30. Vorzugsweise ist das Dichtungselement 30 von der Dichttülle 56 verschieden ausgebildet. Insbesondere ist das Dichtungselement 30 als O-Ring ausgebildet. Die Dichteinheit 16 ist dazu vorgesehen, das längliche Objekt 12 in einem montierten Zustand zumindest abschnittsweise vollständig in Umfangrichtung zu umschließen und abzudichten. Vorzugsweise ist die Dichttülle 56 dazu vorgesehen, spielfrei an dem länglichen Objekt 12 anzuliegen. Vorzugsweise sind das Dichtungselement 30 und die Dichttülle 56 voneinander beabstandet angeordnet. Das Dichtungselement 30 ist in einer Vertiefung 32 an einer Außenseite einer Kupplungseinheit 20 der Durchführungsvorrichtung 10 angeordnet. Vorzugsweise ist die Dichttülle 56 an einer Innenwand der Kupplungseinheit 20 angeordnet. Vorzugsweise greift die Dichttülle 56 in einem an dem länglichen Objekt 12 montierten Zustand der Durchführungsvorrichtung 10 durch das Dichtungselement 30 hindurch.

Die Durchführungsvorrichtung 10 umfasst zumindest eine Stabilisierungseinheit 18. Die Stabilisierungseinheit 18 greift in einem montierten Zustand zumindest teilweise in die Dichteinheit 16 hinein. Vorzugsweise umfasst die Stabilisierungseinheit 18 eine Stützeinheit 58. Vorzugsweise greift die Stützeinheit 58 in die Dichteinheit 16 hinein. Vorzugsweise umfasst die Stabilisierungseinheit 18 zumindest ein Schraubelement 61, insbesondere eine Mutter. Vorzugsweise umfasst die Stützeinheit 58 zumindest ein zu dem Schraubelement 61 komplementäres Schraubelement 62, insbesondere ein Gewinde. Vorzugsweise umfasst die Stabilisierungseinheit 18 zumindest eine Spannhülse 63. Vorzugsweise ist die Spannhülse 63 zwischen den Schraubelementen 61, 62 angeordnet. Vorzugsweise ist die Spannhülse 63 zusammen mit den Schraubelementen 61, 62 dazu vorgesehen, die Stabilisierungseinheit 18 an dem länglichen Objekt 12 zu fixieren.

Die Durchführungsvorrichtung 10 umfasst zumindest die Kupplungseinheit 20.

Die Kupplungseinheit 20 umfasst zumindest einen Aufnahmekanal 22. Der Aufnahmekanal 22 ist zu einer Aufnahme der Dichteinheit 16, insbesondere der Dichttülle 56, vorgesehen. Insbesondere ist der Aufnahmekanal 22 dazu vorgesehen, die Dichteinheit 16 zusammen mit dem in der Dichteinheit 16 angeordneten länglichen Objekt 12 aufzunehmen. Die Kupplungseinheit 20 umfasst zumindest ein Verschlusselement 24. Das Verschlusselement 24 ist zu einer Fixierung der Stabilisierungseinheit 18 an der Kupplungseinheit 20 vorgesehen. Das Verschlusselement 24 ist als Rastelement zur Bildung einer Rastverbindung mit der Stabilisierungseinheit 18 ausgebildet. Insbesondere ist das Verschlusselement 24 als Rastaufnahme ausgebildet. Die Stabilisierungseinheit 18 umfasst zumindest ein weiteres Verschlusselement 64. Das weitere Verschlusselement 64 ist komplementär zu dem Verschlusselement 24 ausgebildet. Insbesondere ist das weitere Verschlusselement 64 als Rastzunge ausgebildet. Vorzugsweise ist das weitere Verschlusselement 64 an der Stützeinheit 58 angeordnet. Vorzugsweise ist das weitere Verschlusselement 64 in einem an der Kupplungseinheit 20 montierten Zustand zumindest teilweise, insbesondere zumindest zur Hälfte, innerhalb des Aufnahmekanals 22 angeordnet. Insbesondere greift das weitere Verschlusselement 64 in einem an der Kupplungseinheit 20 montierten Zustand von einer Innenwand des Aufnahmekanals 22 aus in das, insbesondere als Rastaufnahme ausgebildete, Verschlusselement 24 hinein. Vorzugsweise umfasst die Kupplungseinheit 20 zumindest ein zu dem Verschlusselement 24 analoges sonstiges Verschlusselement (hier nicht sichtbar) auf einer dem Verschlusselement 24 abgewandten Seite des Aufnahmekanals 22. Vorzugsweise umfasst die Stabilisierungseinheit 18 zumindest ein zu dem weiteren Verschlusselement 64 analoges zusätzliches Verschlusselement 66. Insbesondere ist das zusätzliche Verschlusselement 64 auf einer dem weiteren Verschlusselement 64 abgewandten Seite der Stützeinheit 58 angeordnet. Insbesondere ist das zusätzliche Verschlusselement 66 zu einer Rastverbindung mit dem sonstigen Verschlusselement vorgesehen.

Die Kupplungseinheit 20 umfasst zumindest ein reversibles Fixierelement 34 zu einer Fixierung des länglichen Objekts 12 an dem Aufnahmekanal 22. Insbesondere ist das reversible Fixierelement 34 als Mutter ausgebildet. Vorzugsweise umfasst die Kupplungseinheit 20 zumindest ein weiteres reversibles Fixierelement 36, insbesondere eine Schraube. Vorzugsweise ist das weitere reversible Fixierelement 36 komplementär zu dem reversiblen Fixierelement 34 ausgebildet. Vorzugsweise umfasst das reversible Fixierelement 34 einen Andockbereich, insbesondere zu einem Ansetzen eines Fixierwerkzeugs. Vorzugsweise umfasst das Fixierelement 34 ein Druckverteilerplättchen. Insbesondere ist der Andockbereich einteilig mit dem Druckverteilerplättchen ausgebildet. Alternativ ist das Druckverteilerplättchen separat ausgebildet. Vorzugsweise ist eine maximale Erstreckung des Druckverteilerplättchens größer als eine maximale Erstreckung des Andockbereichs. Vorzugsweise weist der Aufnahmekanal 22 eine Durchgangsöffnung 74 auf. Insbesondere ist die Durchgangsöffnung 74 zu einer Befestigung des reversiblen Fixierelements 34, insbesondere mittels des weiteren reversiblen Fixierelements 36, vorgesehen. Insbesondere ist die Durchgangsöffnung 74 zu einer Aufnahme des weiteren reversiblen Fixierelements 36 vorgesehen. Insbesondere ist das Fixierelement 34 dazu vorgesehen, das längliche Objekt 12 an eine Innenwand des Aufnahmekanals 22 zu klemmen. Vorzugsweise ist der Aufnahmekanal 22 in einem Bereich um die Durchgangsöffnung 74 in Umfangsrichtung teilweise offen, insbesondere als Führungsschiene, ausgebildet.

Figur 4 zeigt die Kupplungseinheit 20. Vorzugsweise erstreckt sich der Aufnahmekanal 22 entlang einer Haupterstreckungsrichtung der Kupplungseinheit 20. Vorzugsweise umfasst die Kupplungseinheit 20 entlang ihrer Haupterstreckungsrichtung, insbesondere der Aufnahmekanal 22, einen Aufnahmeabschnitt 70. Vorzugsweise umfasst die Kupplungseinheit 20 entlang ihrer Haupterstreckungsrichtung, insbesondere der Aufnahmekanal 22, einen Dichtungsabschnitt 28.

Der Dichtungsabschnitt 28 ist entlang einer Richtung des Aufnahmekanals 22 verjüngend ausgebildet. Vorzugsweise umfasst die Kupplungseinheit 20 entlang ihrer Haupterstreckungsrichtung, insbesondere der Aufnahmekanal 22, einen Zugentlastungsabschnitt 72. Vorzugsweise ist der Dichtungsabschnitt 28 entlang der Haupterstreckungsrichtung der Kupplungseinheit 20 zwischen dem Aufnahmeabschnitt 70 und dem Zugentlastungsabschnitt 72 angeordnet. Vorzugsweise ist das Verschlusselement 24 in dem Aufnahmeabschnitt 70 angeordnet. Vorzugsweise ist die Vertiefung 32 zur Aufnahme des Dichtungselements 30 in dem Dichtungsabschnitt 28 angeordnet. Vorzugsweise sind/ist die Durchgangsöffnung 74 und/oder das reversible Fixierelement 34 in dem Zugentlastungsabschnitt 72 angeordnet. Vorzugsweise ist die Dichttülle 56 in dem Aufnahmeabschnitt 70 angeordnet (vergleiche Figur 3). Vorzugsweise greift die Dichttülle 56 durch den Dichtungsabschnitt 28 hindurch, insbesondere von dem Aufnahmeabschnitt 70 her bis in den Zugentlastungsabschnitt 72 hinein. Vorzugsweise greift die Stabilisierungseinheit 18, insbesondere die Stützeinheit 58, zumindest teilweise in den Aufnahmeabschnitt 70 und/oder in den Dichtungsabschnitt 28 hinein.

Die Kupplungseinheit 20 umfasst zumindest ein Verankerungselement 26, insbesondere einen Hohlraumanker, zu einer Fixierung der Kupplungseinheit 20 hinter der physischen Begrenzung, insbesondere dem Wandbauteil 14 (vergleiche insbesondere Figur 2). Vorzugsweise ist das Verankerungselement 26 als Rastzunge ausgebildet. Vorzugsweise umfasst die Kupplungseinheit 20 zumindest ein weiteres Verankerungselement 68. Vorzugsweise ist das weitere Verankerungselement 68 analog zu dem Verankerungselement 26 ausgebildet. Vorzugsweise ist das weitere Verankerungselement 68 auf einer dem Verankerungselement 26 abgewandten Seite des Aufnahmekanals 22 angeordnet. Insbesondere sind/ist das Verankerungselement 26 und/oder das weitere Verankerungselement 68 in dem Zugentlastungsabschnitt 72 angeordnet. Insbesondere ist das Verankerungselement 26 zwischen der Durchgangsöffnung 74 und der Vertiefung 32 angeordnet. Insbesondere ist die Vertiefung 32 zwischen dem Verankerungselement 26 und dem Verschlusselement 24 angeordnet. Vorzugsweise ist eine Haupterstreckungsebene des Verankerungselements 26 und/oder des weiteren Verankerungselements 68 zumindest im Wesentlichen senkrecht zu einer Haupterstreckungsebene des Verschlusselements 24 und/oder des sonstigen Verschlusselements angeordnet. Vorzugsweise ist eine maximale Quererstreckung der Kupplungseinheit 20 in zumindest einer Ebene, welche das Verankerungselement 26 und/oder das weitere Verankerungselement 68 umfasst und welche insbesondere senkrecht zu einer Haupterstreckungsrichtung der Kupplungseinheit 20 verläuft, größer als eine hierzu parallele maximale Quererstreckung des Dichtungsabschnitts 28, insbesondere in einem spannungslosen Ankerzustand des Verankerungselements 26. Vorzugsweise umfasst das Verankerungselement 26 eine Rastfläche. Insbesondere ist die Rastfläche zumindest im Wesentlichen senkrecht zu der Haupterstreckungsrichtung der Kupplungseinheit 20 angeordnet. Insbesondere ist die Rastfläche auf einer dem Aufnahmeabschnitt 70 und/oder dem Dichtungsabschnitt 28 zugewandten Seite des Verankerungselements 26 angeordnet. Vorzugsweise umfasst das Verankerungselement 26 eine Montagegleitfläche. Vorzugsweise verläuft die Montagegleitfläche quer zu der Haupterstreckungsrichtung der Kupplungseinheit 20 und/oder der Rastfläche. Vorzugsweise ist die Montagegleitfläche auf einer von dem Aufnahmeabschnitt 70 und/der dem Dichtungsabschnitt 28 abgewandten Seite des Verankerungselements 26 angeordnet.

In dem Aufnahmekanal 22 ist zumindest ein Anlageelement 38, 40 zu einem Anlegen des länglichen Objekts 12 angeordnet. Insbesondere ist das Anlageelement 38, 40 in dem als Führungsschiene ausgebildeten Teil des Aufnahmekanals 22 angeordnet. Vorzugweise ist das Anlageelement 38, 40 als Vertiefung, insbesondere als Nut, ausgebildet. Vorzugsweise ist eine Haupterstreckungsrichtung des Anlageelements 38, 40 zumindest im Wesentlichen parallel zu der Haupterstreckungsrichtung der Kupplungseinheit 20 angeordnet. Vorzugsweise ist das reversible Fixierelement 34 dazu vorgesehen, das längliche Objekt 12 an dem Anlageelement 38, 40 zu fixieren, insbesondere in das als Nut ausgebildete Anlageelement 38, 40 zu drücken.

An einer Außenfläche des Aufnahmekanals 22 sind Stützstreben 42 angeordnet. Insbesondere sind die Stützstreben 42 in dem Aufnahmeabschnitt 70 und/oder dem Dichtungsabschnitt 28 angeordnet. Insbesondere legen die Stützstreben 42 in einem zu der Haupterstreckungsrichtung senkrechten Querschnitt einen Umfang der Kupplungseinheit 20 fest. Ein zum Aufnahmekanal 22 zumindest im Wesentlichen senkrechter Querschnitt der Kupplungseinheit 20, welcher einen größten Umfang 44 aufweist, ist zumindest im Wesentlichen polygonal, insbesondere quadratförmig, ausgebildet.

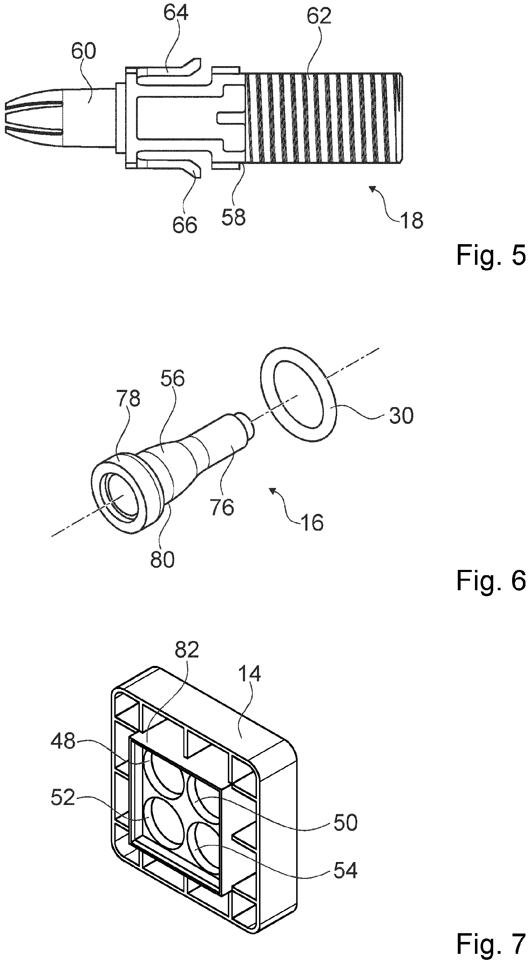

Figur 5 zeigt die Stützeinheit 58 der Stabilisierungseinheit 18. Vorzugsweise umfasst die Stützeinheit 58 ein Stützelement 60. Vorzugsweise umfasst das Stützelement 60 kammartige Fortsätze, welche insbesondere in einem an der Dichteinheit 16 montierten Zustand an einer Innenwand der Dichttülle 56 anliegen. Vorzugsweise ist das weitere Verschlusselement 64 zwischen dem Stützelement 60 und dem komplementären Schraubelement 62 angeordnet.

Figur 6 zeigt die Dichteinheit 16. Insbesondere umfasst die Dichttülle 56 einen Einführabschnitt 80, zu einem Einführen des länglichen Objekts 12. Vorzugsweise umfasst die Dichttülle 56 zumindest einen Dichtabschnitt 76. Vorzugsweise weist der Dichtabschnitt 76 einen kleineren Durchmesser, insbesondere einen kleineren Innendurchmesser, als der Einführabschnitt 80 auf. Vorzugsweise umfasst die Dichttülle 56 eine Verdickung 78. Insbesondere ist die Verdickung 78 in dem Einführabschnitt 80 angeordnet. Insbesondere weist die Dichttülle 56 an der Verdickung 78 den größten Durchmesser, insbesondere den größten Innendurchmesser und/oder den größten Außendurchmesser, auf.

Figur 7 zeigt das Wandbauteil 14. Vorzugsweise umfasst das Wandbauteil 14 mehrere analog ausgebildete weitere Aufnahmeelemente 50, 52, 54. Vorzugsweise sind die Aufnahmeelemente 48, 50, 52, 54 von einem Rahmenelement 82 umgeben. Vorzugsweise ist ein größter Innenumfang des Rahmenelements 82 zumindest im Wesentlichen polygonal, insbesondere quadratförmig, ausgebildet. Vorzugsweise entspricht ein Innenumfang des Rahmenelements 82 bis auf einen Toleranzwert einem ganzzahlig Vielfachen einer durchschnittlichen Kantenlänge des größten Umfangs 44 der Durchführungsvorrichtung 10. Insbesondere ist das Rahmenelement 82 dazu vorgesehen, eine Anzahl an zumindest im Wesentlichen parallel angeordneten Durchführungsvorrichtungen 10 passgenau aufzunehmen.

### Bezugszeichen

- 10: Durchführungsvorrichtung
- 12: längliches Objekt
- 14: Wandbauteil
- 16: Dichteinheit
- 18: Stabilisierungseinheit
- 20: Kupplungseinheit
- 22: Aufnahmekanal
- 24: Verschlusselement
- 26: Verankerungselement
- 28: Dichtungsabschnitt
- 30: Dichtungselement
- 32: Vertiefung
- 34: reversibles Fixierelement
- 36: weiteres reversibles Fixierelement
- 38: Anlageelement
- 40: Anlageelement
- 42: Stützstreben
- 44: größter Umfang
- 46: Durchführungssystem
- 48: Aufnahmeelement
- 50: Aufnahmeelement
- 52: Aufnahmeelement
- 54: Aufnahmeelement
- 56: Dichttülle
- 58: Stützeinheit
- 60: Stützelement
- 61: Schraubelement
- 62: komplementäres Schraubelement
- 63: Spannhülse
- 64: weitere Verschlusselement
- 66: zusätzliches Verschlusselement
- 68: weiteres Verankerungselement
- 70: Aufnahmeabschnitt
- 72: Zugentlastungsabschnitt
- 74: Durchgangsöffnung
- 76: Dichtabschnitt
- 78: Verdickung
- 80: Einführabschnitt
- 82: Rahmenelement

## Patentansprüche

1. Durchführungsvorrichtung, insbesondere Kabeldurchführungsvorrichtung, zur Durchführung eines länglichen Objekts (12) durch zumindest eine physische Begrenzung, insbesondere ein Wandbauteil (14), mit zumindest einer Dichteinheit (16), welche dazu vorgesehen ist, das längliche Objekt (12) in einem montierten Zustand zumindest abschnittsweise vollständig in Umfangrichtung zu umschließen und abzudichten, mit zumindest einer Stabilisierungseinheit (18), welche in einem montierten Zustand zumindest teilweise in die Dichteinheit (16) hineingreift, und mit eine Kupplungseinheit (20) mit einem Aufnahmekanal (22) zu einer Aufnahme der Dichteinheit (16), insbesondere zusammen mit dem in der Dichteinheit (16) angeordneten länglichen Objekt (12), **dadurch gekennzeichnet, dass** die Kupplungseinheit (20) ein Verschlusselement (24) und die Stabilisierungseinheit (18) zumindest ein zu dem Verschlusselement (24) komplementäres weiteres Verschlusselement (64) zu einer Fixierung der Stabilisierungseinheit (18) an der Kupplungseinheit (20) aufweist, wobei das Verschlusselement (24) als Rastelement zur Bildung einer Rastverbindung mit der Stabilisierungseinheit (18) ausgebildet ist, und wobei die Kupplungseinheit (20) zumindest ein Verankerungselement (26), insbesondere einen Hohlraumanker, umfasst zu einer Fixierung der Kupplungseinheit (20) hinter der physischen Begrenzung, insbesondere dem Wandbauteil (14).

2. Durchführungsvorrichtung nach einem der vorhergehenden Ansprüche, **dadurch gekennzeichnet, dass** die Kupplungseinheit (20) zumindest einen sich entlang einer Richtung des Aufnahmekanals (22) verjüngenden Dichtungsabschnitt (28) aufweist.

3. Durchführungsvorrichtung nach einem der vorhergehenden Ansprüche, **dadurch gekennzeichnet, dass** die Dichteinheit (16) ein Dichtungselement (30) umfasst, welches in einer Vertiefung (32) an einer Außenseite der Kupplungseinheit (20) angeordnet ist.

4. Durchführungsvorrichtung nach einem der vorhergehenden Ansprüche, **dadurch gekennzeichnet, dass** die Kupplungseinheit (20) zumindest ein reversibles Fixierelement (34, 36) zu einer Fixierung des länglichen Objekts (12) an dem Aufnahmekanal (22) umfasst.

5. Durchführungsvorrichtung nach einem der vorhergehenden Ansprüche, **dadurch gekennzeichnet, dass** in dem Aufnahmekanal (22) zumindest ein Anlageelement (38, 40) zu einem Anlegen des länglichen Objekts (12) angeordnet ist.

6. Durchführungsvorrichtung nach einem der vorhergehenden Ansprüche, **dadurch gekennzeichnet, dass** an einer Außenfläche des Aufnahmekanals (22) Stützstreben (42) angeordnet sind.

7. Durchführungsvorrichtung nach einem der vorhergehenden Ansprüche, **dadurch gekennzeichnet, dass** ein zu dem Aufnahmekanal (22) zumindest im Wesentlichen senkrechter Querschnitt der Kupplungseinheit (20), welcher einen größten Umfang (44) aufweist, zumindest im Wesentlichen polygonal, insbesondere quadratförmig, ausgebildet ist.

8. Durchführungssystem mit zumindest einer Durchführungsvorrichtung nach einem der Ansprüche 1 bis 7 und mit zumindest einem Wandbauteil (14), welches zumindest ein Aufnahmeelement (48, 50, 52, 54) zu einer Aufnahme der zumindest einen Durchführungsvorrichtung aufweist.

## Claims

1. Pass-through device, in particular cable pass-through device, for guiding an elongate object (12) through at least one physical limitation, in particular a wall component (14),
with at least one sealing unit (16) which is configured, in a mounted state, to at least section-wise completely encompass and seal the elongate object (12) in a circumferential direction,
with at least one stabilization unit (18) which at least partially engages in the sealing unit (16) in a mounted state
and with a coupling unit (20) having a receiving channel (22) for receiving the sealing unit (16), in particular together with the elongate object (12) arranged in the sealing unit (16),
**characterised in that** the coupling unit (20) comprises a closure element (24) and the stabilization unit (18) comprises at least one further closure element (64), complementary to the closure element (24), for a fixing of the stabilization unit (18) to the coupling unit (20),
wherein the closure element (24) is realized as a latch element for creating a latching connection with the stabilization unit (18)
and wherein the coupling unit (20) comprises at least one anchoring element (26), in particular a hollow-space anchor, for a fixing of the coupling unit (20) behind the physical limitation, in particular the wall component (14).

2. Pass-through device according to one of the preceding claims,
**characterised in that** the coupling unit (20) comprises at least one sealing section (28) that tapers along a direction of the receiving channel (22).

3. Pass-through device according to one of the preceding claims,
**characterised in that** the sealing unit (16) comprises a sealing element (30), which is arranged in a deepening (32) on an outer side of the coupling unit (20).

4. Pass-through device according to one of the preceding claims,
**characterised in that** the coupling unit (20) comprises at least one reversible fixing element (34, 36) for a fixing of the elongate object (12) to the receiving channel (22).

5. Pass-through device according to one of the preceding claims,
**characterised in that** at least one adjoining element (38, 40) for an adjoining of the elongate object (12) is arranged in the receiving channel (22).

6. Pass-through device according to one of the preceding claims,
**characterised in that** supporting struts (42) are arranged on an outer surface of the receiving channel (22).

7. Pass-through device according to one of the preceding claims,
**characterised in that** a cross section of the coupling unit (20), which is at least substantially perpendicular to the receiving channel (22) and has a maximal circumference (44), is realized so as to be at least substantially polygonal, in particular rectangular-cuboid-shaped.

8. Pass-through system
with at least one pass-through device according to one of claims 1 to 7 and with at least one wall component (14) comprising at least one receiving element (48, 50, 52, 54) for receiving the at least one pass-through device.

## Revendications

1. Dispositif de passage, en particulier dispositif de passage de câble, pour faire passer un objet allongé (12) à travers au moins une limitation physique, en particulier un composant-paroi (14),
avec au moins une unité d'étanchéité (16) prévue pour entourer et sceller l'objet allongé (12) en état monté au moins par sections complètement en direction circonférentielle,
avec au moins une unité de stabilisation (18) qui en état monté au moins partiellement engrène dans l'unité d'étanchéité (16)
et avec une unité de couplement (20) ayant un conduit de logement (22) pour recevoir l'unité d'étanchéité ((16), en particulier conjointement avec l'objet allongé (12) disposé dans l'unité d'étanchéité (16),
**caractérisé en ce que** l'unité de couplement (20) comprend un élément de fermeture (24) et l'unité de stabilisation (18) comprend au moins un autre élément de fermeture (64), complémentaire à l'élément de fermeture (24), pour un fixement de l'unité de stabilisation (18) à l'unité de couplement (20), l'élément de fermeture (24) étant réalisé comme élément d'encliquetage pour former une liaison d'encliquetage avec l'unité de stabilisation (18) et
l'unité de couplement (20) comprenant au moins un élément d'ancrage (26), en particulier un ancre d'espace creux, pour un fixement de l'unité de couplement (20) derrière la limitation physique, en particulier le composant-paroi (14).

2. Dispositif de passage selon l'une des revendications précédentes,
**caractérisé en ce que** l'unité de couplement (20) comprend au moins une section d'étanchéité (28) se rétrécissant le long d'une direction du conduit de logement (22).

3. Dispositif de passage selon l'une des revendications précédentes,
**caractérisé en ce que** l'unité d'étanchéité (16) comprend un élément de scellage (30) disposé dans un renfoncement (32) sur une face extérieure de l'unité de couplement (20).

4. Dispositif de passage selon l'une des revendications précédentes,
**caractérisé en ce que** l'unité de couplement (20) comprend au moins un élément de fixement réversible (34, 36) pour un fixement de l'objet allongé (12) au conduit de logement (22).

5. Dispositif de passage selon l'une des revendications précédentes,
**caractérisé en ce que** dans le conduit de logement (22) au moins un élément jouxtant (38, 40) est disposé pour faire jouxter l'objet allongé (12).

6. Dispositif de passage selon l'une des revendications précédentes,
**caractérisé en ce que** des entretoises porteuses (42) sont disposées sur une surface extérieure du conduit de logement (22).

7. Dispositif de passage selon l'une des revendications précédentes,
**caractérisé en ce qu'**une coupe transversale de l'unité de couplement (20), qui est au moins sensiblement perpendiculaire au conduit de logement (22) et comporte une circonférence maximale (44), est réalisé au moins sensiblement en forme polygonale, en particulier en forme de parallélépipède rectangle.

8. Système de passage
avec au moins un dispositif de passage selon l'une des revendications 1 à 7 et avec au moins un composant-paroi (14) comprenant au moins un élément de logement (48, 50, 52, 54) pour recevoir l'au moins un dispositif de passage.
